# EUROPÄISCHE PATENTSCHRIFT

(11) **EP 1 582 034 B1**
(45) Veröffentlichungstag und Bekanntmachung des Hinweises auf die Patenterteilung: **21.02.2007**
(21) Anmeldenummer: 03814452.3
(22) Anmeldetag: 19.12.2003
(51) Int. Cl.: H04L 12/28

(54) **VERFAHREN UND KOMMUNIKATIONSEINRICHTUNG ZUR ERWEITERUNG DER BREITE DER DATENÜBERTRAGUNGSRATEN IN DRAHTLOSEN LOKALEN NETZWERKEN**
METHOD AND COMMUNICATION DEVICE FOR EXPANDING THE RANGE OF DATA TRANSMISSION RATES IN WIRELESS LOCAL AREA NETWORKS
PROCEDE ET DISPOSITIF DE COMMUNICATION POUR ELARGIR LA PLAGE DE VITESSES DE TRANSMISSION DE DONNEES DANS DES RESEAUX SANS FIL

(30) Priorität: 06.01.2003 DE 10300366
(43) Veröffentlichungstag der Anmeldung: 05.10.2005
(73) Patentinhaber: Philips Semiconductors Dresden AG, 01099 Dresden (DE)
(72) Erfinder: NITSCHE, Gunnar, 01445 Radebeul (DE); HOFMANN, Matthias, 01705 Freital (DE); AUE, Volker, 01277 Dresden (DE)
(74) Vertreter: Adler, Peter
(86) Internationale Anmeldenummer: PCT/DE2003/004218
(87) Internationale Veröffentlichungsnummer: WO 2004/062196

(56) Entgegenhaltungen:
- WO-A-02/17572
- "IEEE standard for information technology - telecommunications and information exchange between systems - local and metropolitan area networks - specific requirement. Part 11: wireless LAN medium access control (MAC) and physical layer (PHY) specification. (ISO/IEC 8802-11, ANSI/IEEE Std 802.11-1999)" ISO/IEC 8802-11 ANSI/IEEE STD 802.11, XX, XX, 20. August 1999 (1999-08-20), Seiten 1,34--58, XP002206839
- MARCUS GAHLER: "Proposed Text for Extended Supported Rates Element" IEEE P802.11, [Online] 8. Januar 2003 (2003-01-08), Seiten 1-3, XP002282640 Gefunden im Internet: <URL:http://www.ieee802.org/11/Documents/D ocumentHolder/3-022.zip> [gefunden am 2004-05-27]

## Beschreibung

Die Erfindung betrifft ein Verfahren zur Datenübertragung in drahtlosen lokalen Netzwerken, wobei die Datenübertragung zwischen einem ersten und zweiten Kommunikanten, in denen eine erste standardisierte Datenübertragungsregel implementiert ist, mittels Senden und/oder Empfangen von Informationselementen mit varianten Elementformaten auf elektromagnetischen Signalwegen realisiert wird. Die Informationselemente bestehen dabei aus Elementidentifikationsteil, Längenangabeteil und Informationsteil. Der Elementidentifikationsteil weist einen zulässigen Wertebereich auf, aus dem ein erster standardisierter Wert des Elementidentifikationsteiles das Informationselement als ein erstes Informationselement kennzeichnet. Das erste Informationselement enthält in seinem Informationsteil Parameter der Datenübertragung, nämlich einen Satz von durch den sendenden Kommunikanten unterstützten Datenübertragungsraten gemäß einer ersten Datenübertragungsregel. Ein empfangen- der Kommunikant speichert die Parameter des sendenden Kommunikanten zur Einstellung der Datenübertragung bei Rücksendung an den sendenden Kommunikanten. Von jedem der Kommunikanten als Empfänger wird bei Erkennen eines Wertes des Elementidentifikationsteiles außerhalb des zulässigen Wertebereiches die Länge des Informationsteiles aus dem Längenangabeteil ermittelt und der Informationsteil entsprechend der ermittelten Länge übersprungen.

Die Erfindung betrifft auch eine Kommunikationseinrichtung zur Datenübertragung in drahtlosen Netzwerken, die darin als erster Kommunikant mit einem zweiten Kommunikanten über elektromagnetische Signalwege verbindbar ist. Die Kommunikationseinrichtung weist zumindest eine Sendeeinheit auf. Dabei ist in der Kommunikationseinrichtung eine - erste Informationselemente, bestehend aus Elementeidentifikationsteil, Längenangabeteil und Informationsteil,- definierende erste Datenübertragungsregel, die einen zulässigen Wertebereich des Elementeindentifikationsteiles festlegt, implementiert.

Die Bedeutung drahtloser Netzwerke hat in den letzten Jahren stetig zugenommen. Ihre Einsatzmöglichkeiten scheinen unbegrenzt. Die einfachste Möglichkeit ist der Aufbau mit Hilfe von zwei oder mehreren Hosts (Kommunikanten) mit drahtlosen Netzwerkkarten in einem sogenannten Ad-Hoc Netz.

Wenn man das drahtlose Netzwerk (WLAN) mit einem drahtgebundenen lokalen Netzwerk (LAN) verbinden will, ist ein Access-Point (AP) notwendig. Solch eine Netzwerk-Struktur wird auch mit Distributionssystem (DS) bezeichnet.

Ein Access-Point (erster Kommunikant) bildet mit mindestens einer einzelnen Station (zweiter Kommunikant) eine Funkzelle.

Die Erhöhung der Abdeckung wird durch zusätzliche Zellen mit mehreren Access-Points erreicht. Jeder Access-Point wirkt wie eine klassische Netzwerk-Bridge.

Ein Problem, dass eine größere Verbreitung von WLAN verhinderte, war lange Zeit die unzureichende Standardisierung. Das hat sich inzwischen mit zunehmendem Tempo geändert, nachdem das Institut of Electrical and Electronics Engineering (IEEE) in den letzten Jahren WLAN-Standards verabschiedet hat. Diesbezüglich ist auf das verabschiedete Dokument zu verweisen: XP002206839, "IEEE standard for information technology telecommurdcations and information exchange between systems - local and metropolitan area networks - specific requirement. Part 11: wireless LAN medium access control (MAC) and physical layer (PHY) specification."(ISO/IEC 8802-11, ANSI/IEEE Std 802.11-1999), 20. August 1999

Hierin wird ein Verfahren zur Datenübertragung in drahtlosen lokalen Netzwerken beschrieben. Ein Kommunikant sendet zur Einstellung der Datenübertragung an den anderen Kommunikanten ein Informationselement, bestehend aus Elementeidentifikationsteil, Längenangabeteil und Informationsteil, wobei der Elementeidentifkationsteil einen für beide Kommunikanten gemäß einer Datenübertragungsregel standardisierten Wertebereich aufweist, der definiert, dass der Inforrmationsteil innerhalb von einer definierten maximalen Breite zulässige Datenübertragungsraten enthält.

Der Nachteil dieses bekannten Verfahrens besteht darin, dass wenn die definierte maximale Breite überschritten wird (in der erste Kommunikant mehrere Datenübertragungsraten unterstützt), dies zu Inkompatibilitäten gegenüber dem zweiten Kommunikanten führt, der nur die vorgesehene maximale Breite der Datenübertragungsraten unterstützt.

Ein bisheriger Nachteil ist auch, dass drahtlose Netze gegenüber drahtgebundenen Netzwerken geringere Datenüberuagungsgeschwindigkeiten erreichen.

Gründe hierfür sind, dass die von den Regulatoren bereitgestellten Bandbreiten begrenzt sind und dass drahtlose Netzwerke zusätzliche Sicherheitsmechanismen und erweiterte Informationen in den Datenpaketen einführen müssen, um die Charakteristik einer Funkverbindung berücksichtigen zu können.

Da Funkverbindungen anfälliger für Störungen als Kabel sind, hat man im Standard 802.11 zusätzliche Korrekturmechanismen auf dem MAC-Layer eingeführt.

Diese sorgen bei Fehlern in der Datenübertragung für ein erneutes Verschicken der Datenpakete, ohne dass höhere Protokollschichten davon etwas mitbekommen. Dies führt nun möglicherweise zu verlängerten Datenübertragungszeiten im Vergleich zu der recht fehlerfreien Verbindung in einem kabelgebundenen Netzwerk.

Das IEEE-Kommitee führte die Weiterentwicklung des schon etablierten WLAN-Standards 802.11 durch die Ergänzungen von 802.11a für 5 Ghz und 802.11b für 2,4 GHz fort.

Derzeit wird an einer weiteren Erhöhung der Datenrate im 2,4 GHz Band in der IEEE 802.11g Arbeitsgruppe gearbeitet. Ein wichtiges Merkmal des neuen Standards ist die Abwärtskompatibilität zum etablierten IEEE 802.11b Standard.

Die Anbieterfirmen haben recht schnell gemerkt, dass mangelnde Kompatibilität abträglich für die Akzeptanz ihrer Produkte der drahtlosen lokalen Netzwerktechnik ist.

Um eine Anpassung an verschiedene Funkkanälen zu ermöglichen, erlaubt der Standard 802.11 und dessen Erweiterungen 802.11a und b verschiedene Datenübertragungsraten. Die Datenraten werden in einem Informationselement codiert, das gemäss IEEE 802.11 eine maximale Anzahl von 8 Raten erlaubt und im Bakensignal übertragen wird.

Der IEEE 802.11g Standard sieht vor, mehr als 8 Datenraten zu erlauben. Interoperabilitätstests haben gezeigt, dass bei einer Ankündigung von mehr als 8 Datenraten im herkömmlichen Informationselement die Abwärtskompatibilität zu bestehenden Lösungen nicht mehr gewährleistet ist.

Die Aufgabe der Erfindung besteht nunmehr darin, bei vollständiger Kompatibilität mit Kommunikanten bisheriger Arbeitsweise eine größere Breite der Datenübertragungsraten zu ermöglichen.

Die Aufgabe wird dadurch gelöst, dass zumindest bei einem der Kommunikanten die erste und eine zweite Datenübertragungsregel implementiert und der zulässige Wertebereich derart erweitert wird, dass ein zweiter standardisierter Wert des Elementidentifikationsteiles das Informationselement als ein zweites Informationselement kennzeichnet, das in seinem Informationsteil Parameter der Datenübertragung nämlich einen Satz von durch den sendenden Kommunikanten unterstützten Datenübertragungsraten gemäß der zweiten Datenübertragungsregel enthält. Somit besteht die Möglichkeit, zusätzlich zu den Parametern für die Datenübertragung gemäß der ersten Datenübertragungsregel auch noch Parameter für die Datenübertragung nach der zweiten Datenübertragungsregel von dem sendenden Kommunikanten an den empfangenden Kommunikanten übertragen werden. So lässt beispielsweise die zweite Datenübertragungsregel eine größere Vielfalt an Parametern zu als die erste. Somit können alternativ oder zusätzlich zu den Parametern der ersten Datenübertragungsregeln noch Parameter der zweiten verwendet werden.

Zweckmäßiger Weise erfolgt eine klare Trennung der Parameter gemäß der ersten und der zweiten Datenübertragungsregel dadurch, dass in dem ersten Informationselement nur Parameter der Datenübertragung gemäß der ersten Datenübertragungsregel und in dem zweiten Informationselement nur Parameter der Datenübertragung gemäß der zweiten Datenübertragungsregel enthalten sind.

Im Zusammenhang damit, dass Informationselemente, deren Elementidentifikation nicht dem Wertevorrat entsprechen, von jedem Kommunikanten übersprungen werden, ist das Verfahren auch abwärts kompatibel. Vorteilhafter Weise wird bei Empfang des zweiten Informationselementes durch einen Kommunikanten, in dem nur die erste Datenübertragungsregel implementiert ist, das zweite Informationselement übersprungen. Werden dabei zweite Informationselemente an Kommunikanten gesendet, in denen nur die erste Datenübertragungsregel implementiert ist, so liegt die Elementidentifikation des zweiten Informationselementes außerhalb des zulässigen Wertebereiches und das zweite Informationselement wird von dem empfangenden Kommunikanten übersprungen und verursacht somit keine Störung.

Der Vorteil der größeren Variation von Parametern der Datenübertragung wird insbesondere dadurch erreicht, dass bei Empfang des zweiten Informationselementes durch einen Kommunikanten, in dem beide Datenübertragungsregeln implementiert sind, die Parameter des ersten und zweiten Informationselementes gespeichert werden.

Das Verfahren wird vorteilhafter Weise dadurch ausgestaltet, dass die Werte in dem Informationsteil von zweiten Informationselementen, einen Satz von durch den sendenden Kommunikanten unterstützten Datenübertragungsraten darstellen, der Gestalt, dass jeder Wert einer unterstützten Datenübertragungsrate entspricht. Somit informiert ein sendender Kommunikant den empfangenden Kommunikanten über alle die Datenübertragungsraten, die ihm möglich sind, zu verarbeiten. Der empfangende Kommunikant kann dann bei Rücksendung eine geeignete Datenübertragungsrate auswählen.

In einer Ausgestaltung des erfindungsgemäßen Verfahrens ist vorgesehen, dass die Differenz einer Datenübertragungsrate, die einem Wert entspricht, zu der Datenübertragungsrate, die dem nächstfolgenden Wert entspricht, größer oder gleich 500 kBit/s ist. Somit steht eine große Variationsbreite von Datenübertragungsraten zur Verfügung.

Besonders zweckmäßig ist es dabei, dass die Differenz 1 MBit/s beträgt.

In einer weiteren Ausgestaltung des Verfahrens ist vorgesehen, dass höchstens acht Werte den Datenübertragungsraten der ersten Datenübertragungsregel und alle weiteren Werte den Datenübertragungsraten der zweiten Datenübertragungsregel entsprechen. Dies entspricht älteren Standardvorgaben, in denen höchstens acht Werte für die Variation der Datenübertragungsraten vorgesehen waren.

Hierzu ist es auch möglich, dass in dem zweiten Informationselement zusätzlich Werte für Datenübertragungsraten enthalten sind, die gleich Werten für Datenübertragungsraten der ersten Datenübertragungsregel sind.

Dabei besteht die Möglichkeit, dass bei Empfang des zweiten Informationselementes durch einen Kommunikanten, in dem beide Datenübertragungsregeln implementiert sind, nur die Parameter des zweiten Informationselementes gespeichert werden.

Das erfindungsgemäße Verfahren kann auch dadurch erweitert werden, dass in der Weise, die dem ersten und zweiten Informationselement entspricht, neben dem zweiten Informationselement noch ein drittes oder weitere Informationselemente gebildet werden, die dritte oder weitere Datenübertragungsregeln repräsentieren.

In einer Ausgestaltung des erfindungsgemäßen Verfahrens ist vorgesehen, dass die Datenübertragungsraten mit Hilfe von Wertepaaren anstatt einfacher Werte codiert werden. Dabei codiert der eine Wert des Paares die Datenübertragungsregel selbst und der andere Wert die Datenrate. Besonders zweckmäßig ist es dabei, die Codierung der Datenrate von der Datenübertragungsregel abhängig zu machen. Damit ist eine sehr flexible Erweiterung für neue Datenübertragungsregeln möglich.

Die Aufgabe wird auch durch eine Kommunikationseinrichtung gelöst, in der eine zweite Datenübertragungsregel mit einem erweiterten Wertebereich des Elementeidentifikationsteiles implementiert ist. Durch die Sendeeinheit sind zweite Informationselemente sendbar, die durch einen zweiten standardisierten Wert des Elementeidentifikationsteiles definiert sind. Dabei enthält das in seinem Informationsteil Parameter der Datenübertragung nämlich einen Satz von durch den sendenden Kommunikanten unterstützten Datenübertragungsraten gemäß der zweiten Datenübertragungsregel.

Durch diese Kommunikationseinrichtung ist es möglich, bei einem unbekannten zweiten Kommunikanten z.B. zuerst zu versuchen, Informationselemente nach der zweiten Datenübertragungsregel zu senden. Dabei wird ein Elementeindentifikationsteil mit dem standardisierten Wert versehen. Auf der Empfängerseite kann somit ein Sender, der nach der zweiten Datenübertragungsregel arbeiten kann, identifiziert werden. Kann der zweite Kommunikant ebenfalls mit der zweiten Datenübertragungsregel arbeiten, kann dieser auf die entsprechende Betriebsart eingestellt werden. Kann er nur nach der ersten Datenübertragungsregel arbeiten, wird er den standardisierten Wert nicht "verstehen" können, da dieser außerhalb des zulässigen Wertebereiches liegt. Damit wird dieser Empfänger das Informationselement überspringen. Eine derart ausgestaltete Kommunikationseinrichtung stört zweite Kommunikanten, die als Kommunikationseinrichtungen, in denen nur die erste Datenübertragungsregel implementier ist, nicht

In einer Ausführungsform der Erfindung ist in der Kommunikationseinrichtung eine Empfangseinheit angeordnet ist, die für den Empfang eines ersten und eines zweiten Informationselementes ausgebildet ist. Damit ist die erfindungsgemäße Kommunikationseinrichtung sowohl für das Senden als auch für den Empfang von Informationen sowohl nach der ersten als auch nach der zweiten Datenübertragungsregel geeignet.

In einer weiteren Ausführung der erfindungsgemäßen Kommunikationseinrichtung ist vorgesehen, dass sie in Abhängigkeit des Empfanges von Informationselementen beim Senden zwischen erster und zweiter Datenübertragungsregel umschaltbar ist. Damit wird die Kommunikationseinrichtung sowohl abwärts- wie auch aufwärtskompatibel. Wird nämlich eine Information nach der ersten Datenübertragungsregel empfangen kann die Kommunikationseinrichtung auf die Arbeit mit der ersten Datenübertragungsregel umschalten und daraufhin setzen beide Kommunikanten ihre Kommunikation auf der Grundlage der ersten Datenübertragunsregel fort.

Emfängt die Kommunikationseinrichtung eine Information mit der zweiten Datenübertragungsregel - etwa durch eine identisch aufgebaute Kommunikationseinrichtung als Kommunikant auf der anderen Seite, wird sie auf die Arbeit nach der zweiten Datenübertragungsregel umschalten.

Die erfindungsgemäße Kommunikationseinrichtung ist vorteilhaft mit einem Speicher versehen, der zum Speichern von Paramtern empfangener zweiter Informationselemente ausgebildet ist. Damit kann zu einem späteren Zeitpunkt die Kommunikation beispielweise gleich nach der zweiten Datenübertragungsregel begonnen werden, wenn die abgespeichert ist, da in einer vorhergehenden Kommunikation bereits die zweite Datenübertragungsregel relevant war und anzunehmen ist, dass sich der selbe Kommunikant noch in der Nähe aufhält. Somit kann die Zeit für eine Abstimmung auf die Datenübertragungsregel zunächst entfallen.

In einer Weiterbildung ist vorgesehen, dass ein Speicher angeordnet ist, der zum Speichern von Paramtern empfangener erster und zweiter Informationselemente ausgebildet ist. Damit kann das gleich Verfahren, wie vorstehend beschrieben auch für die erste Datenübertragunsregel genutzt werden.

Besonders vorteilhaft ist es, die Kommunikationseinrichtung derart fortzubilden, dass in gleicher Weise wie die zweite Datenübertragungsregel eine dritte oder weitere Datenübertragungsregeln implementiert sind. Damit kann die Auf- und Abwärtskompatibilität auch für andere Datenübertragungsregeln ausweitet werden.

Die Erfindung soll nachfolgend anhand eines Ausführungsbeispieles näher erläutert werden. In den zugehörigen Zeichnungen zeigt
- Fig.1: den Aufbau eines Informationselementes und
- Fig.2: ein Blockschaltbild der Datenübertragungsvorgänge im drahtlosen lokalen Netz.

In der Erläuterung des Ausführungsbeispieles ist der nach dem Stand der Technik "kritische Fall" einer erfolgreichen Datenübertragung zwischen einem ERP-Acces-Point 1 und einer Station 2, welche nach dem Stand der Technik vorliegt, berücksichtigt.

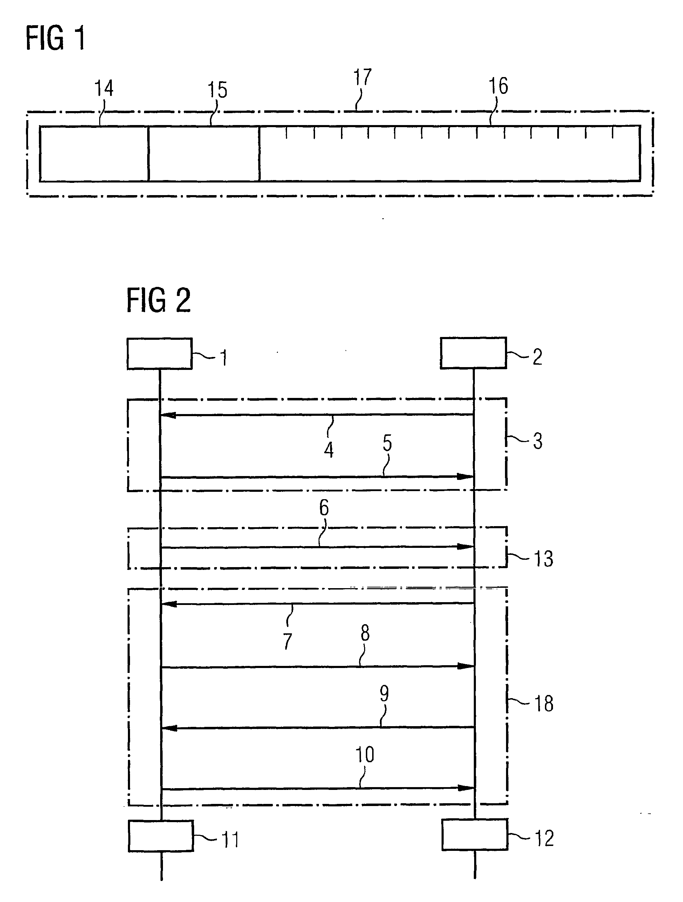

In Figur 1 ist der grundlegende Aufbau eines Informations- Elementes 17 ersichtlich. Das Informations-Element 17 besteht aus dem Elementidentifikationsteil 14, Längenangabeteil 15, und dem Informationsteil 16. Somit enthält das hiformationselement 17 alle wichtigen Daten um die Datenübertragungsregel zu realisieren.

In Figur 2 ist erkennbar, dass für die Datenübertragungsvorgänge drei Möglichkeiten der Datenratenübermittlung bestehen:
- Datenübertragungs-Prüfvorgang 3
- Funk-Bakensignal-Sendevorgang 13
- Assoziierungsvorgang 18.

Ein Access-Point, nach der zweiten Datenübertragungsregel arbeitet, wird im Folgenden als ERP-Access-Point(Extended Rate PHY-Access-Point) 1 bezeichnet.

Die Datenraten-Übermittlung findet zwischen dem ERP-Access-Point 1 und einer Station 2, die über die bekannten Datenübertragungsregeln des Standes der Technik verfügt, statt.

Im Datenübertragungs-Prüfvorgang 3 fordert die Station 2 mit einer Prüfanforderung 4, die den Elementidentifikationsteil 14 enthält, den ERP-Access-Point 1 zur Identifikation auf.

Da der ERP-Access-Point 1 über die erfindungsgemäßen Datenübertragungsregeln verfügt, kann er mit dem für die Station 2 verständlichen richtigen Elementidentifikationsteil 14 mit der Prüfantwort 5 antworten und sein Informations- Element 17 mitteilen.

Der ERP-Access-Point 1 sendet im Funk-Bakensignal-Sendevorgang 13 in regelmäßigen Abständen sein Funk-Bakensignal 6 aus, mit der alle Stationen in der Funkzelle das Informationselement 17 nach der ersten als auch das nach der zweiten Datenübertragungsregel mitgeteilt bekommen. Die Station 2 speichert das Informationselement nach der ersten Datenübertragungsregel und ignoriert das Informationselement nach der zweiten Datenübertragungsregel.

Im Assoziierungsvorgang 18 löst die Station 2 eine erste Authentifizierung 7 aus, die den ERP-Access-Point 1 auffordert mit einer zweiten Authentifizierung 8 zu antworten. Da der ERP-Access-Point 1 über die erfindungsgemäßen Datenübertragungsregeln verfügt, kann die Kommunikation von der Station 2 mit der Anforderung der Assoziierung 9 fortgesetzt werden und der ERP-Access-Point 1 antwortet mit der Assoziierungsantwort 10. Danach nehmen beide Stationen den jeweiligen Zustand der erfolgreichen Assoziierung 11; 12 ein.

### Bezugszeichenliste

- 1: ERP-Acces-Point
- 2: Station
- 3: Datenübertragungs-Prüfvorgang
- 4: Prüfanforderung
- 5: Prüfantwort
- 6: Funk-Bakensignal des ERP-Access-Point
- 7: erste Authentifizierung
- 8: zweite Authentifizierung
- 9: Anforderung der Assoziierung
- 10: Assoziierungs-Antwort
- 11: Zustand der erfolgreichen Assoziierung des ERP-Acces-Point
- 12: Zustand der erfolgreichen Assoziierung der ERP-Station
- 13: Funk-Bakensignal-Sendevorgang
- 14: Elementidentifikationsteil
- 15: Längenangabeteil
- 16: Informationsteil
- 17: Informationselemente
- 18: Assoziierungsvorgang

## Patentansprüche

1. Verfahren zur Datenübertragung in drahtlosen lokalen Netzwerken, wobei die Datenübertragung zwischen einem ersten und zweiten Kommunikanten, in denen eine erste standardisierte Datenübertragungsregel implementiert ist, mittels Senden und/oder Empfangen von Informationselementen mit varianten Elementformaten auf elektromagnetischen Signalwegen realisiert wird, wobei die Informationselemente aus Elementidentifikationsteil, Längenangabeteil und Informationsteil bestehen und der Elementidentifikationsteil einen zulässigen Wertebereich aufweist, aus dem ein erster standardisierter Wert des Elementidentifikationsteiles das Informationselement als ein erstes Informationselement kennzeichnet, das in seinem Informationsteil Parameter der Datenübertragung, nämlich einen Satz von durch den sendenden Kommunikanten unterstützten Datenübertragungsraten gemäß einer ersten Datenübertragungsregel enthält, ein empfangender Kommunikant die Parameter des sendenden Kommunikanten zur Einstellung der Datenübertragung bei Rücksendung an den sendenden Kommunikanten speichert und von jedem der Kommunikanten als Empfänger bei Erkennen eines Wertes des Elementidentifikationsteiles außerhalb des zulässigen Wertebereiches die Länge des Informationsteiles aus dem Längenangabeteil ermittelt und der Informationsteil entsprechend der ermittelten Länge übersprungen wird, **dadurch gekennzeichnet, dass** zumindest bei einem der Kommunikanten die erste und eine zweite Datenübertragungsregel implementiert und der zulässige Wertebereich derart erweitert wird, dass ein zweiter standardisierter Wert des Elementidentifikationsteiles das Informationselement als ein zweites Informationselement kennzeichnet, das in seinem Informationsteil Parameter der Datenübertragung, nämlich einen Satz von durch den sendenden Kommunikanten unterstützten Datenübertragungsraten gemäß der zweiten Datenübertragungsregel enthält.

2. Verfahren nach Anspruch 1, **dadurch gekennzeichnet, dass** in dem ersten Informationselement nur Parameter der Datenübertragung gemäß der ersten Datenübemagungsregel und in dem zweiten Informationselement nur Paramter der Datenübertragung gemäß der zweiten Datenübertragungsregel enthalten sind.

3. Verfahren nach Anspruch 1 oder 2, **dadurch gekennzeichnet, dass** bei Empfangen des zweiten Informationselementes durch einen Kommunikanten, in dem nur die erste Datenübertragungsregel implementiert ist, das zweite Informationselement übersprungen wird.

4. Verfahren nach Anspruch 1 oder 2, **dadurch gekennzeichnet, dass** bei Empfang des zweiten Informationselementes durch einen Kommunikanten, in dem beide Datenüberaagungsregeln implementiert sind, die Parameter des ersten und zweiten Infonnationselementes gespeichert werden.

5. Verfahren nach einem der Ansprüche 1 bis 4, **dadurch gekennzeichnet, dass** die Werte in dem Informationsteil von zweiten Informationselementen, einen Satz von durch den sendenden Kommunikanten unterstützten Datenübertragungsmten darstellen, der Gestalt, dass jeder Wert einer unterstützten Datenübertragungsrate entspricht.

6. Verfahren nach Anspruch 5, **dadurch gekennzeichnet, dass** die Differenz einer Datenübertragungsrate, die einem Wert entspricht, zu der Datenübertragungsrate, die dem nächstfolgenden Wert entspricht, größer oder gleich 500 kBit/s ist.

7. Verfahren nach Anspruch 6, **dadurch gekennzeichnet, dass** die Differenz 1 MBit/s beträgt.

8. Verfahren nach einem der Ansprüche 5 bis 7, **dadurch gekennzeichnet, dass** höchstens acht Werte den Datenübertragungsraten der ersten Datenübenragungsregel und alle weiteren Werte den Datenübertragungsraten der zweiten Datenübertragungsregel entsprechen.

9. Verfahren nach einem der Ansprüche 5 bis 7, **dadurch gekennzeichnet, dass** in dem zweiten Informationselement zusätzlich Werte für Datenübertragungsraten enthalten sind, die gleich Werten für Datenübertragungsraten der ersten Datenübertragungsregel sind, enthalten sind.

10. Verfahren nach Anspruch 9, **dadurch gekennzeichnet, dass** bei Empfang des zweiten Informationselementes durch einen Kommunikanten, in dem beide Datenübertragungsregeln implementiert sind, nur die Parameter des zweiten Informationselementes gespeichert werden.

11. Verfahren nach einem der Ansprüche 1 bis 10, **dadurch gekennzeichnet, dass** neben dem zweiten Informationselement noch ein drittes oder weitere Informationselemente gebildet werden, die dritte oder weitere Datenübertragungsregeln repräsentieren.

12. Verfahren nach einem der Ansprüche 1 bis 11, **dadurch gekennzeichnet, dass** die Datenraten im Informationselement durch Wertepaare repräsentiert sind, derart dass der eine Wert des Paares die Datenübertragungsregel selbst und der andere Wert die Datenrate codieren, wobei die Codierung der Datenrate von der Datenübertragungsregel abhängig sein kann.

13. Kommunikationseinrichtung zur Datenübertragung in drahtlosen lokalen Netzwerken, die darin als erster Kommunikant mit einem zweiten Kommunikanten über elektromagnetische Signalwege verbindbar ist, und die zumindest eine Sendeeinheit aufweist, wobei in der Kommunikationseinrichtung eine - erste Informationselemente, bestehend aus Elementeidentifikationsteil, Längenangabeteil und Informationsteil, definierende- erste Datenübertragungsregel, die einen zulässigen Wertebereich des Elementeindentifikationsteiles festlegt, implementiert ist, **dadurch gekennzeichnet, dass** eine zweite Datenübertragungsregel mit einem erweiterten Wertebereich des Elementeidentifikationsteiles implementiert ist und dass durch die Sendeeinheit zweite Informationselemente sendbar sind, die durch einen zweiten standardisierten Wert des Elementeidentifikationsteiles definiert sind und das in seinem Informationsteil Parameter der Datenübertragung, nämlich einen Satz von durch den sendenden Kommunikanten unterstützten Datenübertragungsraten gemäß der zweiten Datenübertragungsregel enthält.

14. Kommunikationseinrichtung nach Anspruch 13, **dadurch gekennzeichnet, dass** eine Empfangseinheit angeordnet ist, die für den Empfang eines ersten und eines zweiten Informationselementes ausgebildet ist.

15. Kommunikationseinrichtung nach Anspruch 14, **dadurch gekennzeichnet, dass** sie in Abhängigkeit des Empfanges von Informationselementen beim Senden zwischen erster und zweiter Datenübertragungsregel umschaltbar ist.

16. Kommunikationseinrichtung nach einem der Ansprüche 13 bis 15, **dadurch gekennzeichnet, dass** ein Speicher angeordnet ist, der zum Speichern von Parametern empfangener zweiter Informationselemente ausgebildet ist.

17. Kommunikationseinrichtung nach einem der Ansprüche 13 bis 15, **dadurch gekennzeichnet, dass** ein Speicher angeordnet ist, der zum Speichern von Parametern empfangener erster und zweiter Informationselemente ausgebildet ist.

18. Kommunikationseinrichtung nach einem der Ansprüche 13 bis 17, **dadurch gekennzeichnet, dass** in gleicher Weise wie die zweite Datenübertragungsregel eine dritte oder weitere Datenübertragungsregeln implementiert sind.

## Claims

1. Method for data transmission in wireless local area networks, whereby the data transmission is performed between a first and a second communicant, in which a first standardised data transmission rule is implemented, by means of the transmission and/or receipt of information elements with varying element formats on electromagnetic signals paths, whereby the information elements comprise an element identification part, length details part and information part and the element identification part has a permitted value range, from which a first standardised value of the element identification part identifies the information element as a first information element, which in its information part contains parameters of the data transmission, that is to say a set of data transfer rates supported by the transmitting communicant according to a first data transmission rule, a receiving communicant stores the parameters of the transmitting communicant for adjusting the data transmission in the return transmission to the transmitting communicant and each communicant as a receiver upon detection of a value of the element identification part outside of the permitted value range determines the length of the information part from the length details part and the information part is skipped according to the length determined, **characterised in that** at least at one of the communicants the first and a second data transmission rule are implemented and the permitted value range extended in such a way that a second standardised value of the element identification part identifies the information element as a second information element, which in its information part contains parameters of the data transmission, that is to say a set of data transfer rates according to the second data transmission rule supported by the transmitting communicant.

2. Method according to claim 1, **characterised in that** the first information element contains only parameters of the data transmission according to the first data transmission rule and the second information element contains only parameters of the data transmission according to the second data transmission rule.

3. Method according to claim 1 or 2, **characterised in that** upon receipt of the second information element by a communicant, in which only the first data transmission rule is implemented, the second information element is skipped.

4. Method according to claim 1 or 2, **characterised in that** upon receipt of the second information element by a communicant, in which both data transmission rules are implemented, the parameters of the first and second information elements are stored.

5. Method according to any one of claims 1 to 4, **characterised in that** the values in the information part of second information elements, represent a set of data transfer rates supported by the transmitting communicant, in such a way that each value corresponds to a supported data transfer rate.

6. Method according to claim 5, **characterised in that** the difference between a data transfer rate, corresponding to one value, and the data transfer rate, corresponding to the next value, is greater than or equal to 500 kBit/s.

7. Method according to claim 6, **characterised in that** the difference is 1 MBit/s.

8. Method according to any one of claims 5 to 7, **characterised in that** the highest eight values of the data transfer rates of the first data transmission rule and all further values of the data transfer rates of the second data transmission rule correspond.

9. Method according to any one of claims 5 to 7, **characterised in that** the second information element also contains values for data transfer rates which are identical values for data transfer rates of the first data transfer rule.

10. Method according to claim 9, **characterised in that** upon receipt of the second information element by a communicant, in which both data transmission rules are implemented, only the parameters of the second information element are stored.

11. Method according to any one of claims 1 to 10, **characterised in that** apart from the second information element a third or further information elements are also formed which represent third or further data transmission rules.

12. Method according to any one of claims 1 to 11, **characterised in that** the data rates in the information element are represented by pairs of values, such that one of the values in the pair codes the data transmission rule itself and the other value the data rate, wherein the coding of the data rate can be dependent upon the data transmission rule.

13. Communications device for data transmission in wireless local area networks, which within this as a first communicant can be connected to a second communicant via electromagnetic signal paths, and which has at least a transmitter unit, wherein in the communications device a - first information element, comprising element identification part, length details part and information part, defining - first data transmission rule, which sets a permitted value range of the element identification part, is implemented, **characterised in that** a second data transmission rule with an extended value range of the element identification part is implemented and **in that** via the transmission unit second information elements can be transmitted that are defined by a second standardised value of the element identification part and which in its information part contains parameters on the data transmission, that is to say a set of data transfer rates supported by the transmitting communicant according to the second data transmission rule.

14. Communications device according to claim 13, **characterised in that** a receiver unit is arranged which is designed to receive a first and a second information element.

15. Communications device according to claim 14, **characterised in that** as a function of the receipt of information elements it can switch between first and second data transmission rules.

16. Communications device according to any one of claims 13 to 15, **characterised in that** a memory is arranged which is designed to store parameters of received second information elements.

17. Communications device according to any one of claims 13 to 15, **characterised in that** a memory is arranged which is designed to store parameters of received first and second information elements.

18. Communications device according to any one of claims 13 to 17, **characterised in that** in the same way as the second data transmission rule a third or further data transmission rules is/are implemented.

## Revendications

1. Procédé de transmission de données dans des réseaux locaux sans fil, selon lequel on effectue la transmission de données par l'émission et/ou la réception d'éléments d'informations à formats variables sur des chemins de signaux électromagnétiques entre un premier et un second communicants implémentant une première règle de transmission de données standardisée les éléments d'information consistent en une partie d'identification d'élément, une partie d'indication de longueur et une partie d'information, dont la partie d'identification d'élément présente une plage de valeurs admissibles parmi lesquelles une première valeur standardisée de la partie d'identification d'élément caractérise l'élément d'information comme un premier élément d'information qui, dans sa partie d'information, renferme des paramètres de transmission de données, à savoir un ensemble de vitesses de transmission de données supportées par le communicant émetteur selon une première règle de transmission de données, et selon lequel un communicant récepteur enregistre les paramètres du communicant émetteur afin de régler la transmission de données en cas de renvoi au communicant émetteur, chacun des communicants ayant fonction de récepteur détermine la longueur de la partie d'information à partir de la partie d'indication de longueur après avoir reconnu une valeur de la partie d'identification d'élément située en-dehors de la plage de valeurs admissibles, et on saute la partie d'information en fonction de la longueur déterminée,
**caractérisé en ce que**
pour l'un des communicants au moins, on implémente la première et une deuxième règle de transmission de données, et la plage de valeurs admissibles est élargie de telle sorte qu'une seconde valeur standardisée de la partie d'identification d'élément caractérise l'élément d'information comme un second élément d'information qui renferme dans sa partie d'information des paramètres de transmission de données, à savoir un ensemble de vitesses de transmission de données supportées par le communicant émetteur selon la deuxième règle de transmission de données.

2. Procédé selon la revendication 1,
**caractérisé en ce que**
le premier élément d'information renferme uniquement des paramètres de transmission de données selon la première règle de transmission de données et le second élément d'information uniquement des paramètres de transmission de données selon la deuxième règle de transmission de données.

3. Procédé selon la revendication 1 ou 2,
**caractérisé en ce que**
lors de la réception du second élément d'information par un communicant dans lequel seule la première règle de transmission de données est implémentée, on saute le second élément d'information.

4. Procédé selon la revendication 1 ou 2,
**caractérisé en ce que**
lors de la réception du second élément d'information par un communicant dans lequel les deux règles de transmission de données sont implémentées, on enregistre les paramètres du premier et du second élément d'information.

5. Procédé selon l'une des revendications 1 à 4,
**caractérisé en ce que**
les valeurs dans la partie d'information de seconds éléments d'information représentent un ensemble de vitesses de transmission de données supportées par le communicant émetteur, de telle sorte que chaque valeur correspond à une vitesse de transmission de données supportée.

6. Procédé selon la revendication 5,
**caractérisé en ce que**
la différence entre une vitesse de transmission de données qui correspond à une valeur et la vitesse de transmission de données qui correspond à la valeur suivante est supérieure ou égale à 500 kBit/s.

7. Procédé selon la revendication 6,
**caractérisé en ce que**
la différence est de 1 MBit/s.

8. Procédé selon l'une des revendications 5 à 7,
**caractérisé en ce qu'**
au maximum huit valeurs correspondent aux vitesses de transmission de données de la première règle de transmission de données et toutes les autres valeurs correspondent aux vitesses de transmission de données de la deuxième règle de transmission de données.

9. Procédé selon l'une des revendications 5 à 7,
**caractérisé en ce que**
le second élément d'information renferme en outre des valeurs de vitesses de transmission de données égales aux valeurs des vitesses de transmission de données de la première règle de transmission de données.

10. Procédé selon la revendication 9,
**caractérisé en ce que**
lors de la réception du second élément d'information par un communicant dans lequel les deux règles de transmission de données sont implémentées, seuls les paramètres du second élément d'information sont enregistrés.

11. Procédé selon l'une des revendications 1 à 10,
**caractérisé en ce qu'**
outre le second élément d'information, on forme un troisième élément d'information ou d'autres éléments d'information représentant des troisièmes ou autres règles de transmission de données.

12. Procédé selon l'une des revendications 1 à 11,
**caractérisé en ce que**
les vitesses de données dans l'élément d'information sont représentées par des paires de valeurs, de telle sorte qu'une valeur de la paire code la règle de transmission de données elle-même et que l'autre valeur code la vitesse de données, le codage de la vitesse de données pouvant dépendre de la règle de transmission de données.

13. Dispositif de communication pour la transmission de données dans des réseaux sans fil, susceptible d'y être raccordé comme premier communicant avec un second communicant par des chemins de signaux électromagnétiques, et qui présente au moins une unité émettrice, avec dans le dispositif de communication une première règle de transmission de données implémentée définissant des premiers éléments d'information qui consistent en une partie d'identification d'élément, une partie d'indication de longueur et une partie d'information, et fixant une plage de valeurs admissibles de la partie d'identification d'élément,
**caractérisé en ce qu'**
une deuxième règle de transmission de données est implémentée avec un élargissement de la plage de valeurs de la partie d'identification d'élément, et l'unité émettrice permet d'envoyer des seconds éléments d'information définis par une seconde valeur standardisée de la partie d'identification d'élément et qui renferment dans leur partie d'information des paramètres de transmission de données, à savoir un ensemble de vitesses de transmission de données supportées par le communicant émetteur selon la deuxième règle de transmission de données.

14. Dispositif de communication selon la revendication 13,
**caractérisé en ce qu'**
une unité de réception est prévue pour recevoir un premier et un second élément d'information.

15. Dispositif de communication selon la revendication 14,
**caractérisé en ce qu'**
il peut commuter, à l'émission, entre une première et une deuxième règle de transmission en fonction de la réception d'éléments d'information.

16. Dispositif de communication selon l'une des revendications 13 à 15,
**caractérisé en ce qu'**
une mémoire est prévue pour enregistrer les paramètres des seconds éléments d'information reçus.

17. Dispositif de communication selon l'une des revendications 13 à 15,
**caractérisé en ce qu'**
une mémoire est prévue pour enregistrer les paramètres des premier et second éléments d'information reçus.

18. Dispositif de communication selon l'une des revendications 13 à 17,
**caractérisé en ce qu'**
on implémente une troisième règle de transmission de données ou d'autres règles de transmission de données, de manière identique à la deuxième règle de transmission de données.
